# FASCICULE DE BREVET EUROPEEN

(11) **EP 2 620 659 B1**
(45) Date de publication et mention de la délivrance du brevet: **23.11.2016**
(21) Numéro de dépôt: 13354003.9
(22) Date de dépôt: 30.01.2013
(51) Int. Cl.: F16B 5/01, F16B 37/12

(54) **ACCESSOIRE D'ASSEMBLAGE D'UN MATÉRIEL À UNE STRUCTURE COMPOSITE, ENSEMBLE POUR DOTER UNE STRUCTURE COMPOSITE D'UN TEL ACCESSOIRE ET PROCÉDÉ DE FIXATION D'UN TEL ACCESSOIRE**
ZUBEHÖRTEIL ZUM ZUSAMMENBAU EINES MATERIALS EINER VERBUNDSTRUKTUR, ANORDNUNG ZUM VERSEHEN EINER VERBUNDSTRUKTUR MIT DIESEM ZUBEHÖRTEIL UND BEFESTIGUNGSVERFAHREN EINES SOLCHEN ZUBEHÖRTEILS
ACCESSORY FOR ASSEMBLING A MATERIAL WITH A COMPOSITE STRUCTURE, ASSEMBLY FOR PROVIDING A COMPOSITE STRUCTURE WITH SUCH AN ACCESSORY AND METHOD FOR SECURING SUCH AN ACCESSORY

(30) Priorité: 30.01.2012 FR 1200266
(43) Date de publication de la demande: 31.07.2013
(73) Titulaire: Thales Alenia Space France, 31100 Toulouse (FR)
(72) Inventeur: Bovagnet, Frédéric, 73470 Novalaise (FR); Lejars, Patrick, 73610 St. Alban de Montbel (FR)
(74) Mandataire: Nguyen, Dominique

(56) Documents cités:
- EP-A1- 0 461 299
- GB-A- 423 944
- US-A- 4 428 705

## Description

### Domaine technique de l'invention

L'invention se rapporte au domaine des techniques de solidarisation aux structures composites, telles que les structures composites légères comportant une épaisseur de matériau alvéolaire recouvert d'un revêtement externe ou peau. Plus précisément, l'invention concerne un accessoire d'assemblage d'un matériel à une structure composite, du type comportant :
- une queue d'ancrage à engager par une extrémité, selon une direction d'introduction, dans un logement de la structure composite, et à noyer dans un liant contenu par ce logement, et
- un agencement de montage du matériel.

Un tel accessoire est connu du document US 4 428 705 A.

L'invention concerne également un ensemble pour doter une structure composite d'un accessoire d'assemblage d'un matériel à cette structure composite.

L'invention concerne encore un procédé de fixation d'un accessoire d'assemblage du type précité à une structure composite.

### État de la technique

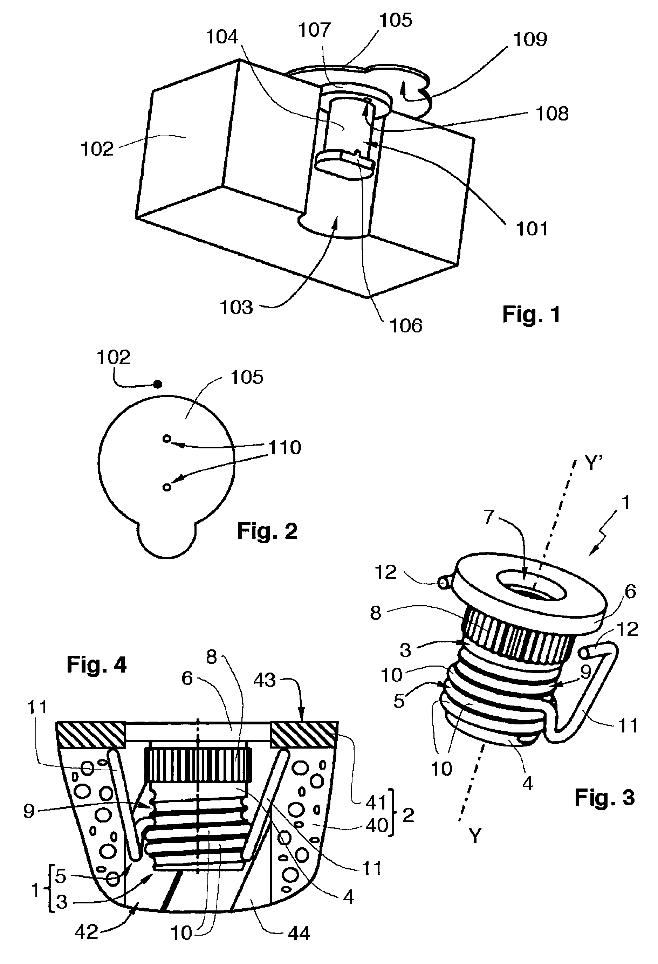

Sur la figure 1, un accessoire 101 d'assemblage d'un matériel non représenté à une structure composite 102 est en cours d'installation selon une technique de l'art antérieur, dans un logement 103 qui a été préalablement ménagé dans la structure composite 102.

L'accessoire d'assemblage 101 comporte une queue d'ancrage 104 qui possède la constitution générale d'un fût creux délimitant un trou taraudé. Masqué sur la figure 1, ce trou est prévu pour recevoir rigidement une tige filetée du matériel à monter et il possède à cet effet une embouchure, fermée et masquée par une plaquette provisoire d'installation 105 à la figure 2.

Une extrémité de la queue d'ancrage 104 porte des moyens anti-rotation 106 ayant la forme d'un rebord à méplats. A l'opposé de ces moyens anti-rotation 106, la queue d'ancrage 104 est pourvue d'une tête 107 qui est percée de deux canaux traversant 108 d'amenée d'un liant dans le logement 103.

A la figure 1, la tête 107 est fixée à une face 109 de la plaquette 105, par un encollage revêtant cette face 109, qui est elle-même collée sur la structure composite 102. Ainsi qu'on peut le voir à la figure 2, deux orifices traversants 110 sont percés dans la plaquette 105. Ils sont positionnés de manière à communiquer avec les canaux 108.

Lorsque l'accessoire d'assemblage 101 est maintenu comme à la figure 1, un canal 108 et un orifice 110 dans l'axe l'un de l'autre servent d'évent pendant qu'une quantité variable de liant est injecté par l'autre orifice 110 et l'autre canal 108, derrière la tête 107, dans le logement 103, jusqu'à remplir celui-ci et noyer la queue 104. Lors de cela, la plaquette 105 retient l'accessoire d'assemblage 101 à l'encontre d'une poussée exercée par le liant, vers l'arrière. La quantité de liant injecté dépend notamment de la ou de passages éventuels entre le logement 103 et des cavités de la structure composite 102, en fonction de la position de ce logement, lorsque la structure composite comporte de telles cavités pouvant être configurées selon une structure en nids d'abeille.

Une fois l'injection terminée, on fait polymériser ou réticuler le liant, après quoi ce dernier adhère aussi bien à la paroi du logement 103 qu'à la queue 104 et lie ceux-ci entre eux.

Après avoir fait durcir le liant, on retire la plaquette 105. Parfois, on s'aperçoit seulement alors que l'accessoire d'assemblage 101 a été déplacé, notamment vers l'arrière et/ou sur un côté, par exemple sous l'effet de la poussée exercée par le liant lors de son injection, en sorte que sa tête 107 est en saillie à l'extérieur et/ou présente un biais, ce qui constitue un défaut pouvant être rédhibitoire.

Lorsque la plaquette 105 a été ôtée, on effectue un nettoyage visant à débarrasser la face externe de la structure composite 102 et la tête 107 des résidus d'encollage que la plaquette 105 n'a pas emporté avec elle lors de son retrait. Ce nettoyage peut également servir à enlever, le cas échéant, du liant qui se serait éventuellement insinué entre la structure composite 102 et la plaquette 105.

Les multiples opérations mentionnées ci-dessus sont précédées d'opérations préalables effectuées avant qu'on parvienne à la configuration de la figure 1.

Certaines de ces opérations préalables sont effectuées par le fournisseur quand l'accessoire d'assemblage 101 est pourvu de la plaquette 105 lors de sa livraison. Un film pelable découpé à la forme d'un oeillet protège alors l'encollage sur la face 109, au niveau d'une couronne où cet encollage n'est pas recouvert par la tête 107. Dans ce cas, une opération préalable à effectuer sur le lieu de pose consiste à retirer le film pelable de la plaquette 105. Dans une opération préalable suivante, on insère la queue 104 dans le logement 103 et on enfonce cette queue 104 jusqu'à ce que la plaquette 105 vienne au contact de la face externe de la structure composite 102. Ensuite, on presse la face encollée 109 contre cette structure composite 102.

De ce qui précède, il ressort que la fixation à demeure de l'accessoire d'assemblage 101 selon la technique employant une plaquette 105 temporaire implique de nombreuses opérations et manipulations. Cette fixation à demeure est longue et compliquée, aussi bien que coûteuse.

### Objet de l'invention

L'invention a au moins pour but de permettre une simplification de la fixation à demeure d'un accessoire d'assemblage du type précité, à une structure composite, au moyen d'un liant de comblement.

Selon l'invention, ce but est atteint grâce à un accessoire s'assemblage selon les revendications annexées et plus particulièrement par un accessoire d'assemblage qui est du type précité et dont la queue d'ancrage est pourvue d'un dispositif de retenue de cette queue vers l'arrière, dans le logement.

L'accessoire d'assemblage peut incorporer une ou plusieurs autres caractéristiques avantageuses, isolément ou en combinaison, en particulier parmi celles définies ci-après.

Avantageusement, le dispositif de retenue comporte au moins une portion d'accrochage latéral sur l'arrière d'une couche constitutive de la structure composite. De préférence, cette portion d'accrochage latéral dépassant latéralement au moins dans une configuration d'accrochage, de manière à pouvoir venir en butée sur l'arrière de la couche.

Avantageusement, le dispositif de retenue est rétractable, transversalement à la direction d'introduction, d'une configuration d'accrochage sur l'arrière d'une couche de la structure composite, à une configuration rétractée, adaptée pour une engagement de la queue d'ancrage et du dispositif de retenue ensemble dans le logement.

Avantageusement, le dispositif de retenue est déformable élastiquement de sa configuration d'accrochage à sa configuration rétractée, dans laquelle ce dispositif de retenue produit un rappel de lui-même vers sa configuration d'accrochage.

Avantageusement, l'accessoire d'assemblage comporte des moyens d'ajustement de la position du dispositif de retenue selon la direction d'introduction, par rapport à la queue d'ancrage.

Avantageusement, les moyens d'ajustement comportent une association de la queue d'ancrage et du dispositif de retenue par vissage de l'un dans l'autre.

Avantageusement, le dispositif de retenue comporte un organe filiforme dont un tronçon intermédiaire forme plusieurs spires vissées sur un filetage complémentaire prévu sur la queue d'ancrage et qui comprend deux tronçons d'extrémité reliés entre eux par le tronçon intermédiaire et définissant chacun une branche latérale déplaçable par déformation élastique vers la queue d'ancrage, jusqu'à la configuration rétractée. De préférence, l'une des branches latérales a une extrémité distale définissant ladite portion d'accrochage latéral. De préférence, l'autre branche latérale a une extrémité distale définissant une autre portion d'accrochage latéral sur l'arrière de la couche constitutive de la structure composite. De préférence, cette autre portion d'accrochage latéral dépasse latéralement dans la configuration d'accrochage, de manière à pouvoir venir en butée sur l'arrière de la couche.

Avantageusement, l'accessoire d'assemblage équipe une structure composite dont un logement reçoit la queue d'ancrage. De préférence, un liant est contenu par le logement et associe mécaniquement la queue d'ancrage à la structure composite. L'agencement de montage permet le montage d'un matériel sur l'accessoire d'assemblage.

L'invention a également pour objet un ensemble pour doter une structure composite d'un accessoire d'assemblage d'un matériel à cette structure composite. Cet ensemble comprend un accessoire d'assemblage tel que défini précédemment, ainsi qu'un dispositif amovible d'installation associé de manière réversible à l'accessoire d'assemblage.

L'ensemble pour doter une structure composite d'un accessoire d'assemblage peut incorporer une ou plusieurs autres caractéristiques avantageuses, isolément ou en combinaison, en particulier parmi celles définies ci-après.

Avantageusement, le dispositif amovible d'installation comporte une surface d'appui sur une surface externe de la structure composite. De préférence, cette surface d'appui et le dispositif de retenue forment ensemble un système de préhension d'une couche de la structure composite entre eux.

Avantageusement, le dispositif amovible d'installation comporte un fourreau de guidage de l'accessoire d'assemblage selon la direction d'introduction, ainsi qu'un piston de poussée de l'accessoire d'assemblage vers une sortie du fourreau de guidage. De préférence, une extrémité avant du piston comporte un agencement de montage complémentaire de l'agencement de montage équipant l'accessoire d'assemblage. De préférence, l'un et l'autre agencement de montage sont configurés pour s'associer de manière réversible en un accouplement de l'accessoire de montage au piston. De préférence, le fourreau de guidage définit ladite surface d'appui et une butée d'arrêt vers l'avant pour le piston.

Avantageusement, le dispositif amovible d'installation comporte un fourreau de guidage de l'accessoire d'assemblage selon la direction d'introduction. De préférence, au moins la queue d'ancrage constitutive de l'accessoire d'assemblage se trouve dans le fourreau de guidage jusqu'à une expulsion de cette queue d'ancrage selon la direction d'introduction, par une sortie du fourreau de guidage, vers un logement de la structure composite. De préférence, le fourreau de guidage est apte à maintenir latéralement le dispositif de retenue dans sa configuration rétractée.

Avantageusement, l'un des agencements de montage comprend un taraudage, l'autre agencement de montage comportant un filetage pouvant se visser dans ce taraudage.

L'invention concerne encore un procédé de fixation d'un accessoire d'assemblage tel que défini précédemment à une structure composite. Ce procédé comprend des étapes dans lesquelles :
a) on introduit le dispositif de retenue et la queue d'ancrage de l'accessoire d'assemblage dans un logement de la structure composite, et
b) alors que le dispositif de retenue retient au moins vers l'arrière la queue d'ancrage, on laisse ou on fait durcir un liant que contient le logement et qui noie au moins partiellement la queue d'ancrage.

Le procédé de fixation peut incorporer une ou plusieurs autres caractéristiques avantageuses, isolément ou en combinaison, en particulier parmi celles définies ci-après.

Avantageusement, le dispositif de retenue et un dispositif amovible d'installation tiennent entre eux une couche de la structure composite de manière à être solidaire de cette couche pendant l'étape b).

Avantageusement, avant l'étape b), le procédé de fixation comporte des étapes dans lesquelles :
- on accouple de manière réversible l'accessoire d'assemblage et le dispositif amovible d'installation, puis
- on serre le dispositif de retenue et le dispositif amovible d'installation l'un vers l'autre en vissant la queue de montage dans le dispositif de retenue.

Avantageusement, dans l'étape a), on expulse la queue d'ancrage hors du fourreau de guidage, par sa sortie, dans le logement, alors que cette sortie est positionnée de manière à déboucher directement dans le logement.

### Description sommaire des dessins

Parmi les figures annexées, les figures 1 et 2 ont trait à un même art antérieur à l'invention. Plus précisément :
- la figure 1 est une vue en perspective, arrachée, qui illustre une étape de la fixation d'un accessoire d'assemblage dans une structure composite, selon une technique connue utilisant une plaquette provisoire d'installation, et
- la figure 2 est une vue en plan qui illustre la même étape que la figure 1 et où la plaquette provisoire d'installation est vue de l'extérieur, telle que collée sur une face extérieure de la structure composite.

D'autres avantages et caractéristiques ressortiront plus clairement de la description qui va suivre d'un mode particulier de réalisation de l'invention donné à titre d'exemple non limitatif et représenté aux figures 3 à 11 annexées, parmi lesquelles :
- la figure 3 est une vue en perspective d'un accessoire d'assemblage conforme à l'invention,
- la figure 4 est une vue latérale, avec arrachement, qui représente une structure composite d'accueil et l'accessoire de la figure 3 tel que fixé dans cette structure composite,

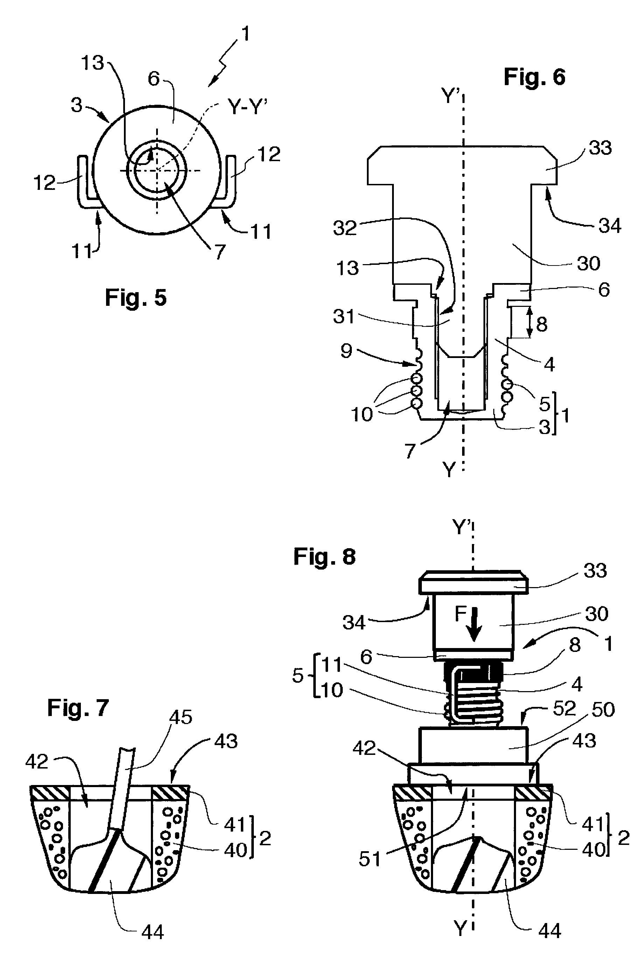

- la figure 5 représente l'accessoire de la figure 3 tel que vu depuis son extrémité arrière,
- la figure 6 est une coupe axiale d'un ensemble résultant de l'association temporaire de l'accessoire d'assemblage de la figure 3 et d'un piston de poussée constitutif d'un dispositif amovible d'installation de cet accessoire d'assemblage,
- la figure 7 est une vue en coupe qui représente une portion d'une structure composite lors d'une étape de la fixation de l'accessoire de la figure 3 dans cette structure composite, selon un procédé conforme à l'invention,
- la figure 8 représente la même portion de structure composite vue en coupe que la figure 7, ainsi que l'ensemble de la figure 6 complété par un fourreau de guidage et vu de côté lors d'une étape succédant à celle de la figure 7,

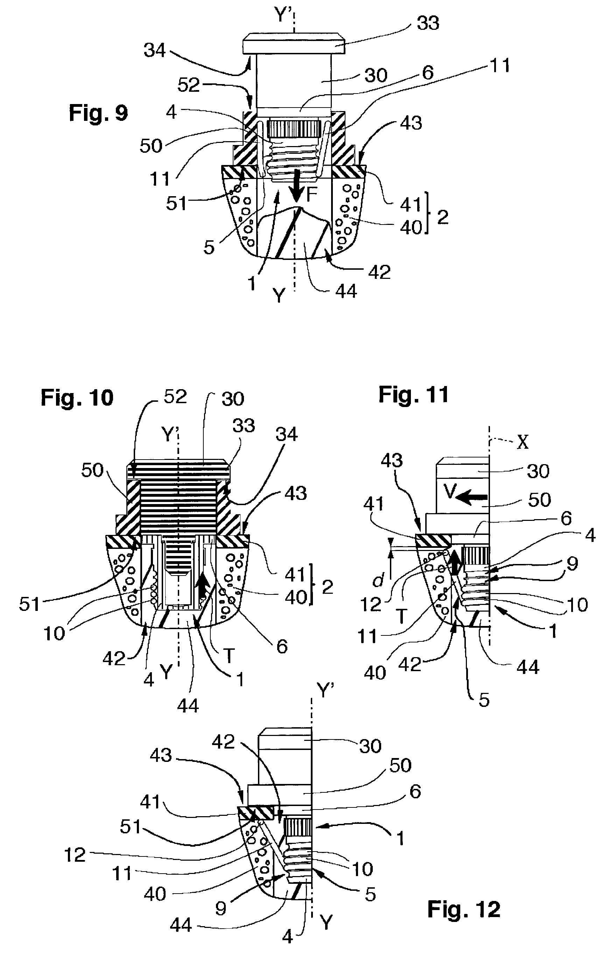

- la figure 9 est une vue latérale, avec arrachement, qui illustre une étape suivante de la fixation de l'accessoire de la figure 3 dans une portion de la structure composite,
- la figure 10 est une vue en coupe qui est faite selon le plan X de la figure 11 et qui illustre une étape suivant celle de la figure 9, lors la fixation de l'accessoire de la figure 3 dans la structure composite,
- la figure 11 est la moitié gauche d'une vue latérale, avec arrachement, qui illustre la même étape que la figure 10 et où la structure composite est encore partiellement représentée, et
- la figure 12 est une vue semblable à la figure 11 et illustre une étape succédant à celle de cette figure 11.

### Description d'un mode préférentiel de l'invention

Conforme à l'invention, l'accessoire d'assemblage 1 représenté seul à la figure 3 est destiné à être fixé dans une structure composite 2, comme à la figure 4, puis à servir au montage d'un matériel non représenté. Ainsi qu'on peut bien le voir à la figure 3, l'accessoire d'assemblage 1 comporte deux organes métalliques, à savoir un corps 3 et une agrafe que supporte une queue d'ancrage 4 de ce corps 3 et qui forme un dispositif 5 de retenue vers l'arrière.

Dans le présent texte et dans les revendications annexées, les termes « arrière » et « avant », ainsi que les termes analogues, se réfèrent au sens d'introduction de l'accessoire d'assemblage 1 lors de sa mise en place dans la structure composite 2, tandis que le terme « axial », le terme « latéral » et les termes analogues se réfèrent à la direction selon laquelle s'effectue cette introduction.

Le corps 3 est globalement symétrique par rapport à un axe principal Y-Y', qui est parallèle à la direction d'introduction de l'accessoire d'assemblage 1. Outre la queue d'ancrage 4, ce corps 3 comprend une tête arrière de bouchage 6 qui présente la forme d'une collerette en saillie latérale, vers l'extérieur. Centrée sur l'axe principal Y-Y', cette tête 6 est coaxiale avec la queue d'ancrage 4, dont elle équipe une extrémité arrière à la manière d'un rebord extérieur.

Dans l'exemple représenté, le corps 3 est percé d'un trou axial 7 de réception d'une tige filetée du matériel à fixer à la structure composite 2. Ce trou 7 traverse la tête 6 et se prolonge dans la queue d'ancrage 4. A son extrémité arrière, il comporte une embouchure ouverte, alors que son extrémité avant est fermée par un fond.

Un tronçon arrière de la queue d'ancrage 4 porte un motif extérieur en relief, qui présente la forme d'un crantage 8 dans l'exemple représenté et qui est prévu pour remplir une fonction anti-rotation autour de l'axe Y-Y'. La queue d'ancrage 4 possède également un tronçon avant, au niveau duquel elle est pourvue d'un filetage externe 9 de section droite sensiblement circulaire et sur lequel est vissé le dispositif de retenue 5. Cette configuration permet de régler la position du dispositif quelle que soit l'épaisseur de la peau.

Selon les conditions d'emploi de l'accessoire d'assemblage 1, le matériau constitutif du corps 3 peut, par exemple, être un aluminium ou un alliage d'aluminium ayant avantageusement subi un traitement de surface tel qu'un traitement du type oxydation anodique chromique colmatée, encore appelé traitement AOC. Ce peut également être un acier inoxydable. D'autres matériaux encore peuvent être utilisés. Par exemple, le corps 3 peut aussi être réalisé en un thermoplastique technique.

Ce dispositif de retenue 5 est constitué d'un organe filiforme : il résulte de la mise en forme d'un fil dont la section droite est sensiblement circulaire et qui est fait d'un métal à ressort, tel qu'un acier inoxydable. Un tronçon intermédiaire de ce fil forme une succession de plusieurs spires jointives 10, dont le relief vers l'intérieur forme un filet de vissage complémentaire du filetage externe 9.

Reliées entre elles par les spires 10, deux portions d'extrémité de l'organe filiforme constituent deux branches latérales d'accrochage 11 sensiblement opposées diamétralement. Ainsi que ceci se voit bien à la figure 4, chaque branche 11 s'étend vers l'arrière à partir des spires 10, avec une inclinaison vers l'extérieur par rapport à la direction d'introduction de l'accessoire d'assemblage 1, de manière à s'éloigner de la queue d'ancrage 4 à mesure que l'on se déplace vers l'arrière. Chaque branche 11 peut être déplacée élastiquement en direction de la queue d'ancrage 4, vers une position sensiblement rabattue dans laquelle le dispositif de retenue 5 est dans une configuration rétractée. Les deux branches 11 forment conjointement un encliquetage à même de franchir le bord d'un trou lors d'une translation vers l'avant, selon la direction d'introduction, et d'effectuer une retenue lors d'une translation inverse, vers l'arrière.

A son extrémité distale, chaque branche 11 se termine par un doigt transversal d'accrochage latéral 12, dirigé de manière sensiblement tangentiel. Comme on peut aisément le constater à la figure 5, chaque doigt 12 dépasse latéralement de la tête 6 lorsque le dispositif de retenue 5 est libre de toute sollicitation extérieure et qu'il se place alors de lui-même dans une configuration expansée d'accrochage.

Toujours sur la figure 5, la référence 13 désigne un lamage prévu à l'embouchure du trou 7 et également visible à la figure 6.

Sur cette figure 6, l'accessoire d'assemblage 1 est pourvu temporairement d'un poussoir, qui est plus précisément un piston 30 et qui est fixé dans l'axe du corps 3, contre sa tête 6. Une extrémité avant de ce piston 30 porte une tige filetée de montage 31, dont le filetage est complémentaire d'un taraudage 32 managé dans la paroi latérale du trou 7. Ce taraudage 32 définit le même sens de vissage que le filetage 9.

En variante, la tige filetée 31 peut porter une rondelle rotative antifriction destinée à faciliter le desserrage du piston 30 avant son dévissage à l'écart du corps 3.

L'extrémité arrière du piston possède un rebord périphérique 33 définissant un épaulement avant 34, qui constitue une face d'appui vers l'avant.

Sur la figure 7 est représentée une portion de la structure composite 2, qui est une structure légère adaptée notamment à une utilisation dans l'aéronautique, dans l'aérospatiale et, plus largement, dans le domaine des transports y compris l'automobile, ainsi que dans certaines industries spécifiques. Cette structure composite 2 comporte un assemblage d'une épaisseur interne ou âme de matériau alvéolaire basse densité 40 et d'une couche externe ou peau de protection 41.

Dans l'exemple représenté, le matériau alvéolaire interne 40 est une mousse de carbone vitreux, tandis que la couche externe 41 est une feuille de carbone. La structure composite 2 peut présenter une autre constitution. Par exemple, le matériau alvéolaire 40 peut présenter une structure en nid d'abeille dont les cloisons sont d'aluminium, tandis que la couche externe est également fait d'aluminium. Le matériau alvéolaire interne 40 et la couche 41 peuvent être faits de matières de natures différentes ou, au contraires, semblables, notamment parmi des matières métalliques, synthétiques, composites et/ou végétales. Des exemples supplémentaires de combinaisons d'une matière pour la couche 41 et d'une matière d'une autre nature pour le matériau alvéolaire interne 4 sont la combinaison carbone-aluminium, la combinaison carbone-papier imprégné, la combinaison thermoplastique renforcé de fibres de verre-thermoplastique naturel.

Toujours à la figure 7, la référence 42 désigne un logement qui est destiné à recevoir l'accessoire d'assemblage 1 et qui a été managé à cet effet dans la structure composite 2, depuis sa surface externe 43 définie par la couche 41. Le logement 42 a une section transversale globalement circulaire. Ses dimensions sont prédéterminées en fonction des spécificités de l'accessoire d'assemblage 1.

Avant de mettre en place l'accessoire d'assemblage 1 dans la structure composite 2, on injecte une colle ou liant 44 dans le logement 42, ce qu'illustre la figure 7. De manière connue en soi, le liant 44 peut être un mélange qui comprend un silicone colloïdal anhydride (silicone dioxyde), une résine époxy, ainsi qu'un catalyseur, et dans lequel un agent moussant peut en outre être ajouté de manière optionnelle. De même que les dimensions du logement 42, la dose de liant 44 déposée dans le logement 42 est prédéterminée. Son dépôt peut être effectué au moyen d'une buse d'injection 45.

Sur la figure 8, la référence 50 désigne un fourreau de guidage qui fait partie d'un même dispositif d'installation amovible que le piston 30. L'extrémité avant du fourreau 50 se termine par une face plane avant qui forme une surface 51 d'appui sur la surface externe 43. A l'opposé de cette surface d'appui 51, l'extrémité arrière du fourreau 50 forme une butée 52 d'arrêt vers l'avant, pour le rebord 33, selon un fonctionnement qui sera exposé plus loin.

La dose prédéterminée de liant 44 a été entièrement déposée à la figure 8, qui illustre une étape succédant à celle de la figure 7. Sur cette figure 8, le dispositif d'assemblage 1 est introduit par son extrémité avant, dans le fourreau 50 qui se trouve à l'entrée du logement 42, de manière à être sensiblement coaxial avec ce logement 42. La flèche F symbolise le sens d'introduction du dispositif d'assemblage 1.

Ainsi qu'on l'aura compris, l'étape dans laquelle on dépose une dose prédéterminée de liant 44 dans le logement 42 précède l'étape dans laquelle on introduit le dispositif de retenue 5 et la queue d'ancrage 4 de l'accessoire d'assemblage 1 dans ce logement 42.

A mesure que le dispositif d'assemblage 1 pénètre dans le fourreau 50, ce dernier repousse les branches 11 vers la queue d'ancrage 4, jusqu'à ce que le dispositif de retenue 5 soit placé dans sa configuration rétractée, ce qui est le cas à la figure 9. Le déplacement des branches 11 vers l'intérieur s'effectue au moyen d'une déformation élastique du dispositif de retenue 5 et génère donc un rappel dans le sens d'un déplacement inverse.

Sur la figure 9, l'accessoire d'assemblage 1 est poussé dans le sens d'introduction F, par l'intermédiaire du piston 30. Le fourreau 50 le guide alors vers le logement 42.

Lors de sa progression en direction du fond du logement 42, l'accessoire d'assemblage 1 atteint le liant 44 puis le repousse vers l'arrière et dans les autres régions initialement vides du logement 42. Ainsi, la progression vers l'avant de l'accessoire 1 se traduit par un comblement progressif du logement 42, de manière que ce comblement ne fait appel à aucun apport supplémentaire de liant 44. Sur la figure 10, l'accessoire d'assemblage a atteint sa profondeur définitive et le liant 44 s'est insinué dans la totalité ou la presque totalité de l'espace entre l'accessoire d'assemblage 1 et la structure composite 2.

Dès que les doigts 12 ont franchi la couche 41, le dispositif de retenue 5 revient de lui-même vers sa forme initiale, sous l'effet du rappel mentionné précédemment et moyennant une pénétration radiale des doigts 12 dans le matériau alvéolaire 40, ce que permet une faible résistance à l'enfoncement que possède ce matériau alvéolaire 40. La couche 41 possède une tenue mécanique empêchant qu'elle puisse être enfoncée aussi aisément que le matériau alvéolaire 40.

Sur la figure 11, le dispositif de retenue 5 est retourné de lui-même dans sa configuration expansée d'origine ou dans une configuration proche. Les doigts 12 sont derrière la couche 41, tout en en étant séparés par une distance d.

Pour amener les doigts 12 contre la face arrière de la couche 41, on fait tourner le piston 30 sur l'axe Y-Y', dans le sens de vissage V défini par le filetage 9. Ce piston fait lui-même tourner le corps 3 dans le sens de vissage V. La queue d'ancrage 4 se visse alors dans les spires 10 du dispositif de retenue 5, que ses doigts 12 en prise dans le matériau alvéolaire 40 empêche de tourner sur lui-même.

Comme on peut bien le voir à la figure 10, le rebord 33 est bloqué vers l'avant par la butée 52 du fourreau 50, dont la surface d'appui 51 est contre la surface externe 43 de la structure composite 2. Il s'ensuit que le dispositif amovible d'installation constitué des éléments 30 et 50 est bloqué vers l'avant et, ce faisant, empêche le corps 3 d'avancer plus, alors que le vissage de la queue d'ancrage 4 dans les spires 10 se traduit par une traction axiale. Aussi, cette traction axiale conduit à un déplacement T vers l'arrière du dispositif de retenue 5, jusqu'à ce que les doigts 12 viennent contre la face arrière de la couche 41. Lorsque la distance d est résorbée, un vissage additionnel de la queue d'ancrage 4 se traduit par un serrage de la couche 41 entre la paire de doigt 12 et le fourreau 50, qui forment ensemble un système de préhension de cette couche 41. La figure 12 illustre comment l'accessoire d'assemblage 1 et le dispositif amovible d'installation se trouvent après le vissage additionnel de la queue d'ancrage 4 et le serrage en résultant.

Telle que la paire de doigts 12 et le fourreau 50 la réalisent entre eux à la figure 12, la préhension de la couche 41 assure un maintien très fiable du corps 3 par rapport à la structure composite 2, ce qui est avantageux. A cet égard, l'accrochage des doigts 12 sur l'arrière de la couche 41 s'oppose très efficacement à une possibilité de recul de l'accessoire d'assemblage 1 sous la poussée exercée par le liant 44 non durci. Cela réduit considérablement le risque d'apparition du défaut de mauvais positionnement mentionné précédemment, que l'on rencontre lorsque la technique antérieure des figures 1 et 2 est employée.

Alors que la couche 41 est toujours fermement tenue entre la paire de doigts 12 et le fourreau 50 comme à la figure 12, on fait ou on laisse durcir par polymérisation ou par réticulation le liant 44.

Lorsque le liant 44 est définitivement durci, on tourne le piston 30 dans le sens de dévissage. Ce piston 30 se dévisse alors par rapport à l'accessoire d'assemblage 1 qui est immobilisé par le liant 44. Le piston 30 et le fourreau 50 sont tous deux retirés de manière à pouvoir être réutilisés pour l'installation d'un autre accessoire d'assemblage 1. Aucun nettoyage de la face externe de la structure 2, ni de la tête 6 n'est requis, ce qui est avantageux.

A la figure 4, l'accessoire d'assemblage 1 est définitivement fixé à demeure dans la structure composite 2. La queue d'ancrage 4 comme le dispositif de retenue 5 sont noyés dans le liant 44 durci, qui adhère fermement aussi bien à eux qu'à la structure composite 2 et qui réalise une liaison solide. Le taraudage 32 permet alors le vissage d'une tige filetée constitutive du matériel à assembler à la structure composite 2. En d'autres termes, il forme un agencement de montage de ce matériel.

L'invention ne se limite pas au mode de réalisation décrit précédemment. En particulier, l'agencement de montage du matériel à assembler à la structure composite 2 peut être autre que le taraudage 32. Par exemple, il peut présenter la forme d'une tige portée par la tête 3 et avantageusement filetée, auquel cas le corps peut être plein et non creux.

De plus, l'expansion transversale du dispositif de retenue depuis sa configuration rétractée jusqu'à sa configuration d'accrochage peut être produite par une ou plusieurs cames portées par la queue d'ancrage et configurées pour exercer une poussée centrifuge sur une ou des portions du dispositif de retenue lorsque est opéré un déplacement relatif particulier des deux organes de l'accessoire d'assemblage l'un par rapport à l'autre. Par exemple, ce ou ces cames peuvent chacune définir une rampe conique destinée à être déplacée axialement pour produire une expansion transversale du dispositif de retenue.

## Revendications

1. Accessoire d'assemblage d'un matériel à une structure composite (2), comportant :
- une queue d'ancrage (4) à engager par une extrémité, selon une direction d'introduction (Y-Y'), dans un logement (42) de la structure composite (2), et à noyer dans un liant (44) contenu par ce logement (42), la queue d'ancrage étant pourvue d'un dispositif (5) de retenue de cette queue (4) vers l'arrière, dans le logement (42)
- le dispositif de retenue (5) étant rétractable, transversalement à la direction d'introduction (Y-Y'), d'une configuration d'accrochage sur l'arrière d'une couche (41) de la structure composite (2), à une configuration rétractée, adaptée pour une engagement de la queue d'ancrage (4) et du dispositif de retenue (5) ensemble dans le logement (42)
- un agencement (32) de montage du matériel,
**caractérisé en ce que** le dispositif de retenue (5) est déformable élastiquement de sa configuration d'accrochage à sa configuration rétractée, dans laquelle ce dispositif de retenue (5) produit un rappel de lui-même vers sa configuration d'accrochage.

2. Accessoire d'assemblage selon la revendication 1, **caractérisé en ce que** le dispositif de retenue (5) comporte au moins une portion (11, 12) d'accrochage latéral sur l'arrière d'une couche (41) constitutive de la structure composite (2), cette portion d'accrochage latéral (11, 12) dépassant latéralement au moins dans une configuration d'accrochage, de manière à pouvoir venir en butée sur l'arrière de la couche (41).

3. Accessoire d'assemblage selon l'une quelconque des revendications précédentes, **caractérisé en ce qu'**il comporte des moyens (9, 10) d'ajustement de la position du dispositif de retenue (5) selon la direction d'introduction (Y-Y'), par rapport à la queue d'ancrage (4).

4. Accessoire d'assemblage selon la revendication 3, **caractérisé en ce que** les moyens d'ajustement comportent une association de la queue d'ancrage (4) et du dispositif de retenue (5) par vissage de l'un dans l'autre.

5. Accessoire d'assemblage selon l'une quelconque des revendications précédentes, **caractérisé en ce que** le dispositif de retenue comporte un organe filiforme dont un tronçon intermédiaire forme plusieurs spires (10) vissées sur un filetage complémentaire (9) prévu sur la queue d'ancrage (4) et qui comprend deux tronçons d'extrémité reliés entre eux par le tronçon intermédiaire (10) et définissant chacun une branche latérale (11) déplaçable par déformation élastique vers la queue d'ancrage (4), jusqu'à la configuration rétractée, l'une des branches latérales (11) ayant une extrémité distale (12) définissant ladite portion d'accrochage latéral, l'autre branche latérale (11) ayant une extrémité distale (12) définissant une autre portion d'accrochage latéral sur l'arrière de la couche (41) constitutive de la structure composite (2), cette autre portion d'accrochage latéral (12) dépassant latéralement dans la configuration d'accrochage, de manière à pouvoir venir en butée sur l'arrière de la couche (41).

6. Accessoire d'assemblage selon l'une quelconque des revendications précédentes, **caractérisé en ce qu'**il équipe une structure composite (2) dont un logement (42) reçoit la queue d'ancrage (4), un liant (44) étant contenu par le logement (42) et associant mécaniquement la queue d'ancrage (4) à la structure composite (2), l'agencement de montage (32) permettant le montage d'un matériel sur l'accessoire d'assemblage.

7. Ensemble pour doter une structure composite (2) d'un accessoire (1) d'assemblage d'un matériel à cette structure composite (2), **caractérisé en ce qu'**il comprend un accessoire d'assemblage (1) selon l'une quelconque des revendications 1 à 6, ainsi qu'un dispositif amovible d'installation (30, 50) associé de manière réversible à l'accessoire d'assemblage (1).

8. Ensemble selon la revendication 7, **caractérisé en ce que** le dispositif amovible d'installation (30, 50) comporte une surface (51) d'appui sur une surface externe (43) de la structure composite, cette surface d'appui (51) et le dispositif de retenue (5) formant ensemble un système de préhension d'une couche (41) de la structure composite (2) entre eux.

9. Ensemble selon la revendication 8, **caractérisé en ce que** le dispositif amovible d'installation comporte un fourreau (50) de guidage de l'accessoire d'assemblage (1) selon la direction d'introduction (Y-Y'), ainsi qu'un piston (30) de poussée de l'accessoire d'assemblage (1) vers une sortie du fourreau de guidage (50), une extrémité avant du piston comportant un agencement de montage (31) complémentaire de l'agencement de montage (32) équipant l'accessoire d'assemblage (1), l'un et l'autre agencement de montage (31, 32) étant configurés pour s'associer de manière réversible en un accouplement de l'accessoire de montage (1) au piston (30), le fourreau de guidage (50) définissant ladite surface d'appui (51) et une butée (52) d'arrêt vers l'avant pour le piston (30).

10. Ensemble selon l'une quelconque des revendications 7 à 9, **caractérisé en ce que** le dispositif amovible d'installation comporte un fourreau (50) de guidage de l'accessoire d'assemblage (1) selon la direction d'introduction (Y-Y'), au moins la queue d'ancrage (4) constitutive de l'accessoire d'assemblage (1) se trouvant dans le fourreau de guidage (50) jusqu'à une expulsion de cette queue d'ancrage (4) selon la direction d'introduction (Y-Y'), par une sortie du fourreau de guidage (50), vers un logement (42) de la structure composite (2), l'accessoire d'assemblage (1) étant selon l'une des revendications 4 et 7, le fourreau de guidage (50) étant apte à maintenir latéralement le dispositif de retenue (1) dans sa configuration rétractée.

11. Procédé de fixation d'un accessoire d'assemblage (1) selon l'une quelconque des revendications 1 à 6 à une structure composite (2), comprenant des étapes dans lesquelles :
a) on introduit le dispositif de retenue (5) et la queue d'ancrage (4) de l'accessoire d'assemblage (1) dans un logement (42) de la structure composite (2), et
b) alors que le dispositif de retenue (5) retient au moins vers l'arrière la queue d'ancrage (4), on laisse ou on fait durcir un liant (44) que contient le logement (42) et qui noie au moins partiellement la queue d'ancrage (4).

12. Procédé de fixation selon la revendication 11, **caractérisé en ce que** le dispositif de retenue (5) et un dispositif amovible d'installation (30, 50) tiennent entre eux une couche (41) de la structure composite (2) de manière à être solidaire de cette couche (41) pendant l'étape b).

13. Procédé de fixation selon la revendication 12, **caractérisé en ce que** l'accessoire d'assemblage (1) est selon l'une quelconque des revendications 6 et 7, et **en ce que**, avant l'étape b), il comporte des étapes dans lesquelles :
- on accouple de manière réversible l'accessoire d'assemblage (1) et le dispositif amovible d'installation (30, 50), puis
- on serre le dispositif de retenue (1) et le dispositif amovible d'installation (30, 50) l'un vers l'autre en vissant la queue de montage (4) dans le dispositif de retenue (5).

14. Procédé de fixation selon l'une quelconque des revendications 11 à 13, **caractérisé en ce qu'**on utilise un accessoire d'assemblage (1) faisant partie d'un ensemble (1, 30, 50) selon l'une quelconque des revendication 9 et 10 et **en ce que**, dans l'étape a), on expulse la queue d'ancrage (4) hors du fourreau de guidage (5), par sa sortie, dans le logement (42), alors que cette sortie est positionnée de manière à déboucher directement dans le logement (42).

## Patentansprüche

1. Zubehör zum Zusammenbauen von Hardware an einer Verbundstruktur (2), das Folgendes umfasst:
- ein Ankerende (4) zum Eingreifen über ein Ende in einer Einführungsrichtung (Y-Y') in ein Gehäuse (42) der Verbundstruktur (2) und zum Eintauchen in ein in dem Gehäuse (42) enthaltenes Bindemittel (44), wobei das Ankerende mit einer Vorrichtung (5) zum Halten des Endes (4) in dem Gehäuse (42) zum hinteren Ende hin versehen ist;
- wobei die Haltevorrichtung (5) quer zur Einführungsrichtung (Y-Y') von einer Anbringkonfiguration am hinteren Teil einer Schicht (41) der Verbundstruktur (2) in eine Abnahmekonfiguration abgenommen werden kann, die zum Ineingriffbringen des Ankerendes (4) und der Haltevorrichtung (5) zusammen im Gehäuse (42) ausgelegt ist;
- eine Anordnung (32) der Baugruppe der Hardware,
**dadurch gekennzeichnet, dass** die Haltevorrichtung (5) elastisch von ihrer Anbringkonfiguration in ihre Abnahmekonfiguration verformbar ist, in der die Haltevorrichtung (5) eine Rückstellkraft in ihre Anbringkonfiguration erzeugt.

2. Baugruppenzubehör nach Anspruch 1, **dadurch gekennzeichnet, dass** die Haltevorrichtung (5) wenigstens einen lateralen Anbringabschnitt (11, 12) auf der Rückseite einer die Verbundstruktur (2) bildenden Schicht (41) umfasst, wobei der laterale Anbringabschnitt (11, 12) lateral wenigstens in einer Anbringkonfiguration vorsteht, um in Anlage an der Rückseite der Schicht (41) kommen zu können.

3. Baugruppenzubehör nach einem der vorherigen Ansprüche, **dadurch gekennzeichnet, dass** es Mittel (9, 10) zum Justieren der Position der Haltevorrichtung (5) in der Einführungsrichtung (Y-Y') relativ zu dem Ankerende (4) umfasst.

4. Baugruppenzubehör nach Anspruch 3, **dadurch gekennzeichnet, dass** die Justiermittel eine Verbindung des Ankerendes (4) und der Haltevorrichtung (5) durch Ineinanderschrauben aufweisen.

5. Baugruppenzubehör nach einem der vorherigen Ansprüche, **dadurch gekennzeichnet, dass** die Haltevorrichtung ein fadenförmiges Element umfasst, von dem ein Zwischenabschnitt mehrere Windungen (10) bildet, die auf ein komplementäres Gewinde (9) am Ankerende (4) geschraubt werden, und der zwei Endabschnitte aufweist, die durch den Zwischenabschnitt (10) miteinander verbunden sind und jeweils einen lateralen Zweig (11) definieren, der durch elastische Verformung in Richtung des Ankerendes (4) in die Abnahmekonfiguration bewegt werden kann, wobei einer der lateralen Zweige (11) ein distales Ende (12) hat, das den lateralen Anbringabschnitt definiert, wobei der andere laterale Zweig (11) ein distales Ende (12) hat, das einen anderen lateralen Anbringabschnitt an der Rückseite der Schicht (41) definiert, die die Verbundstruktur (2) bildet, wobei dieser andere laterale Anbringabschnitt (12) lateral in der Anbringkonfiguration vorsteht, um an der Rückseite der Schicht (41) in Anlage kommen zu können.

6. Baugruppenzubehör nach einem der vorherigen Ansprüche, **dadurch gekennzeichnet, dass** es eine Verbundstruktur (2) ausstattet, von der ein Gehäuse (42) das Ankerende (4) aufnimmt, wobei ein Bindemittel (44) in dem Gehäuse (42) enthalten ist und das Ankerende (4) mechanisch mit der Verbundstruktur (2) verbindet, wobei die Montageanordnung (32) eine Montage von Hardware an dem Baugruppenzubehör zulässt.

7. Baugruppe zum Ausstatten einer Verbundstruktur (2) mit einem Zubehör (1) zum Montieren von Hardware an der Verbundstruktur (2), **dadurch gekennzeichnet, dass** sie ein Baugruppenzubehör (1) nach einem der Ansprüche 1 bis 6 sowie eine abnehmbare Installationsvorrichtung (30, 50) umfasst, die reversibel mit dem Baugruppenzubehör (1) verbunden ist.

8. Baugruppe nach Anspruch 7, **dadurch gekennzeichnet, dass** die abnehmbare Installationsvorrichtung (30, 50) eine Anlagefläche (51) an einer Außenfläche (43) der Verbundstruktur umfasst, wobei diese Anlagefläche (51) und die Haltevorrichtung (5) zusammen ein System zum Ergreifen einer Schicht (41) der Verbundstruktur (2) zwischen sich bilden.

9. Baugruppe nach Anspruch 8, **dadurch gekennzeichnet, dass** die abnehmbare Installationsvorrichtung eine Hülse (50) zum Führen des Baugruppenzubehörs (1) in der Einführungsrichtung (Y-Y') sowie einen Kolben (30) zum Schieben des Baugruppenzubehörs (1) in Richtung eines Auslasses der Führungshülse (50) umfasst, wobei ein vorderes Ende des Kolbens eine Montageanordnung (31) umfasst, die komplementär zu der das Baugruppenzubehör (1) ausstattenden Montageanordnung (32) ist, wobei die eine und die andere Montageanordnung (31, 32) so konfiguriert sind, dass sie das Baugruppenzubehör (1) reversibel mit dem Kolben (30) in einer Kupplung verbinden, wobei die Führungshülse (50) die Anlagefläche (51) und einen Anschlag (52) zur Vorderseite für den Kolben (30) definiert.

10. Baugruppe nach einem der Ansprüche 7 bis 9, **dadurch gekennzeichnet, dass** die abnehmbare Installationsvorrichtung eine Hülse (50) zum Führen des Baugruppenzubehörs (1) in der Einführungsrichtung (Y-Y') umfasst, wobei wenigstens das Ankerende (4), das das Baugruppenzubehör (1) bildet, sich in der Führungshülse (50) bis zu einem Ausstoß dieses Ankerendes (4) in der Einführungsrichtung (Y-Y'), über einen Ausgang der Führungshülse (50), in Richtung eines Gehäuses (42) der Verbundstruktur (2) befindet, wobei das Baugruppenzubehör (1) ein Zubehör gemäß einem der Ansprüche 4 bis 7 ist, wobei die Führungshülse (50) die Haltevorrichtung (1) lateral in ihrer Abnahmekonfiguration halten kann.

11. Verfahren zum Befestigen eines Baugruppenzubehörs (1) nach einem der Ansprüche 1 bis 6 an einer Verbundstruktur (2), das die folgenden Schritte beinhaltet:
a) Einführen der Haltevorrichtung (5) und des Ankerendes (4) des Baugruppenzubehörs (1) in ein Gehäuse (42) der Verbundstruktur (2); und
b) Härtenlassen oder Bewirken des Härtens eines Bindemittels (44), das in dem Gehäuse (42) enthalten ist und in das das Ankerende (4) wenigstens teilweise eingetaucht ist, wenn die Haltevorrichtung (5) das Ankerende (4) wenigstens nach hinten hält.

12. Befestigungsverfahren nach Anspruch 11, **dadurch gekennzeichnet, dass** die Haltevorrichtung (5) und eine abnehmbare Installationsvorrichtung (30, 50) eine Schicht (41) der Verbundstruktur (2) zwischen sich halten, so dass sie einstückig mit der Schicht (41) in Schritt b) ist.

13. Befestigungsverfahren nach Anspruch 12, **dadurch gekennzeichnet, dass** das Baugruppenzubehör (1) ein Zubehör nach einem der Ansprüche 6 und 7 ist, und dadurch, dass es vor Schritt b) die folgenden Schritte beinhaltet:
- reversibles Koppeln des Baugruppenzubehörs (1) und der abnehmbaren Installationsvorrichtung (30, 50); dann
- Festziehen der Haltevorrichtung (1) und der abnehmbaren Installationsvorrichtung (30, 50) aneinander durch Schrauben des Baugruppenendes (4) in die Haltevorrichtung (5).

14. Befestigungsverfahren nach einem der Ansprüche 11 bis 13, **dadurch gekennzeichnet, dass** ein Baugruppenzubehör (1) benutzt wird, das Teil einer Baugruppe (1, 30, 50) nach einem der Ansprüche 9 und 10 bildet, und dadurch, dass in Schritt a) das Ankerende (4) aus der Führungshülse (5) über seinen Ausgang in das Gehäuse (42) ausgestoßen wird, während der Auslass so positioniert ist, dass er direkt in das Gehäuse (42) mündet.

## Claims

1. An accessory for assembling hardware to a composite structure (2), comprising:
- an anchor end (4) to be engaged by an end, in an introduction direction (Y-Y'), in a housing (42) of the composite structure (2), and to be submerged in a binder (44) contained by said housing (42), the anchor end being provided with a device (5) for rearwardly retaining said end (4) inside the housing (42);
- said retention device (5) being retractable, transverse to said direction of introduction (Y-Y'), from an attached configuration on the rear of a layer (41) of the composite structure (2) to a retracted configuration, which is adapted to engage the anchor end (4) and the retention device (5) together inside said housing (42);
- an arrangement (32) of the assembly of the hardware,
**characterised in that** said retention device (5) is resiliently deformable from its attached configuration to its retracted configuration, in which said retention device (5) generates a force to return itself to its attached configuration.

2. The assembly accessory according to claim 1, **characterised in that** the retention device (5) comprises at least one side attachment portion (11, 12) on the rear of a layer (41) forming the composite structure (2), said side attachment portion (11, 12) laterally protruding at least in an attached configuration, so as to be able to come into abutment on the rear of the layer (41).

3. The assembly accessory according to any one of the preceding claims, **characterised in that** it comprises means (9, 10) for adjusting the position of the retention device (5) in the introduction direction (Y-Y') relative to the anchor end (4).

4. The assembly accessory according to claim 3, **characterised in that** the adjustment means comprise an association of the anchor end (4) and of the retention device (5) by screwing one into the other.

5. The assembly accessory according to any one of the preceding claims, **characterised in that** the retention device comprises a filiform component, an intermediate section of which forms a plurality of turns (10) screwed onto a matching thread (9) provided on said anchor end (4) and which comprises two end sections connected together via the intermediate section (10) and each defining a lateral branch (11) that can move by elastic deformation towards the anchor end (4) up to the retracted configuration, one of the lateral branches (11) having a distal end (12) defining said lateral attachment portion, the other lateral branch (11) having a distal end (12) defining a further lateral attachment portion on the rear of the layer (41) forming the composite structure (2), said further lateral attachment portion (12) laterally protruding in the attached configuration, so as to be able to come into abutment on the rear of the layer (41).

6. The assembly accessory according to any one of the preceding claims, **characterised in that** it equips a composite structure (2), a housing (42) of which receives the anchor end (4), a binder (44) being contained by the housing (42) and mechanically associating the anchor end (4) with the composite structure (2), the assembly arrangement (32) allowing hardware to be assembled on the assembly accessory.

7. An assembly for equipping a composite structure (2) with an accessory (1) for assembling hardware to said composite structure (2), **characterised in that** it comprises an assembly accessory (1) according to any one of claims 1 to 6, as well as a detachable installation device (30, 50) reversibly associated with the assembly accessory (1).

8. The assembly according to claim 7, **characterised in that** the detachable installation device (30, 50) comprises an abutment surface (51) on an external surface (43) of the composite structure, said abutment surface (51) and the retention device (5) together forming a system for gripping a layer (41) of the composite structure (2) between them.

9. The assembly according to claim 8, **characterised in that** the detachable installation device comprises a bushing (50) for guiding the assembly accessory (1) in the introduction direction (Y-Y'), as well as a piston (30) for pushing the assembly accessory (1) towards an outlet of the guide bushing (50), a front end of the piston comprising an assembly arrangement (31) matching the assembly arrangement (32) equipping the assembly accessory (1), both assembly arrangements (31, 32) being configured so as to reversibly associate the assembly accessory (1) with said piston (30) in a coupling, the guide bushing (50) defining said abutment surface (51) and a stop (52) towards the front for the piston (30).

10. The assembly according to any one of claims 7 to 9, **characterised in that** the detachable installation device comprises a bushing (50) for guiding the assembly accessory (1) in the introduction direction (Y-Y'), with at least the anchor end (4) forming the assembly accessory (1) being found in the guide bushing (50) up to the ejection of said anchor end (4) in the introduction direction (Y-Y'), via an outlet of the guide bushing (50), towards a housing (42) of the composite structure (2), the assembly accessory (1) being an accessory according to any one of claims 4 and 7, the guide bushing (50) being able to laterally retain the retention device (1) in its retracted configuration.

11. A method for fixing an assembly accessory (1) according to any one of claims 1 to 6 on a composite structure (2), comprising the following steps:
a) introducing the retention device (5) and the anchor end (4) of the assembly accessory (1) into a housing (42) of the composite structure (2); and
b) leaving to harden or causing a binder (44) that is contained by the housing (42) to harden when the retention device (5) retains the anchor end (4) at least rearwardly, which binder at least partially submerges the anchor end (4).

12. The fixing method according to claim 11, **characterised in that** the retention device (5) and a detachable installation device (30, 50) hold between them a layer (41) of the composite structure (2) so as to be integral with said layer (41) during step b).

13. The fixing method according to claim 12, **characterised in that** the assembly accessory (1) is an assembly according to any one of claims 6 and 7, and **in that**, before step b), it comprises the following steps:
- reversibly coupling the assembly accessory (1) and the detachable installation device (30, 50); then
- tightening the retention device (1) and the detachable installation device (30, 50) together by screwing the assembly end (4) into the retention device (5).

14. The fixing method according to any one of claims 11 to 13, **characterised in that** an assembly accessory (1) is used that forms part of an assembly (1, 30, 50) according to any one of claims 9 and 10, and **in that**, during step a), the anchor end (4) is ejected outside of the guide bushing (5), via its outlet, inside the housing (42), while said outlet is positioned so as to directly open out into the housing (42).
